# EUROPÄISCHE PATENTSCHRIFT

(11) **EP 2 026 450 B1**
(45) Veröffentlichungstag und Bekanntmachung des Hinweises auf die Patenterteilung: **18.04.2018**
(21) Anmeldenummer: 08013052.9
(22) Anmeldetag: 19.07.2008
(51) Int. Cl.: H02K 3/28, H02K 3/47, H02K 15/04

(54) **Elektrische Maschine mit einer Wicklung zur Erzeugung eines Drehfeldes und Verfahren zur Herstellung der Wicklung**
Electric machine with a winding for producing a rotating field and method for producing the winding
Machine électrique dotée d'un bobinage destiné à la production d'un champ rotatif et procédé de fabrication du bobinage

(30) Priorität: 16.08.2007 DE 102007038601
(43) Veröffentlichungstag der Anmeldung: 18.02.2009
(73) Patentinhaber: Saurer Germany GmbH & Co. KG, 42897 Remscheid (DE)
(72) Erfinder: Brakensiek, Dirk, 41470 Neuss (DE); Coenen, Norbert, 41199 Mönchengladbach (DE)

(56) Entgegenhaltungen:
- EP-A2- 0 150 070
- WO-A1-93/06649
- DE-A1- 2 511 567
- DE-A1- 3 834 673
- US-A- 1 796 556
- US-A1- 2002 060 263

## Beschreibung

Die Erfindung betrifft eine elektrische Maschine mit einer Wicklung zur Erzeugung eines Drehfeldes mit mindestens zwei Spulen pro Phase und Polpaar, wobei eine erste Spule jeder Phase um 180° elektrisch gegen eine zweite entgegengesetzt gewickelte Spule dieser Phase gedreht ist, wobei sich die Spulen benachbarter Phasen überlappen. Ferner betrifft die Erfindung ein Verfahren zur Herstellung der Wicklung der elektrischen Maschine.

Aus dem US-Patent 4,847,982 ist ein Verfahren zur Herstellung einer Wicklung für einen Elektromotor, der drei Phasen besitzt, die simultan auf einen Eisenkern gewickelt werden, bekannt. Der Elektromotor ist als dreiphasiger Motor ausgeführt, welcher entweder sechs als Eisenkörper ausgebildete Pole aufweist, um den Motor als zweipoligen Motor auszubilden, oder welcher zwölf Pole aufweist, um diesen als vierpoligen Motor auszubilden.

Der Stator des offenbarten Motors besteht aus einem Eisenkern und weist drei aus mehreren Spulen aufgebaute Phasenwicklungen auf den Polen auf, um entweder einen zweipoligen oder einen vierpoligen Motor zu bilden, wobei auf die jeweiligen Pole die Spulen gewickelt werden. Die drei Phasen werden durch eine Wicklung einer ersten Spule im Uhrzeigersinn gebildet, wobei der Eisenkörper daraufhin um 180° elektrisch gedreht wird, bevor die jeweilige zweite Spule entgegen dem Uhrzeigersinn gewunden wird.

Die erste und zweite Spule wird ohne Unterberechung des Leitermaterials nacheinander gewunden, so dass durch das simultane Herstellen der Spulen ein beschleunigtes Wickeln des Wicklungskörpers möglich ist. Dabei werden drei Spulen gleichzeitig auf ausgeprägte Pole des Eisenkörpers aufgewickelt, wobei durch die Drehung des Eisenkörpers um 180° das Wickeln der nächsten drei Spulen ebenfalls parallel erfolgen kann. Der beschriebene Stand der Technik zeigt eine einfache automatisiert zu fertigende Wicklung zur Erzeugung eines Drehfeldes. Das Wickeln von konzentrierten Spulen um ausgeprägte Pole führt jedoch zu einem stark oberwellenbehafteten Drehfeld. Die Oberwellen im Drehfeld der Maschine führen zu Harmonischen, also zu Vielfachen der Grundfrequenz, im Strom beziehungsweise in der Spannung. Dies führt nicht nur zu zusätzlichen Verlusten in der Maschine, sondern auch in der angeschlossenen Elektronik. Zur Ansteuerung von Drehstrommotoren werden zum Beispiel Wechselrichter mit Spannungs-Zwischenkreis verwendet. Die Kondensatoren des Spannungs-Zwischenkreises sind außerordentlich empfindlich gegen Stromspitzen, wie sie durch die Harmonischen hervorgerufen werden. Diese führen zu einer Reduktion der Lebensdauer der Kondensatoren. Aus dem Stand der Technik sind zudem die folgenden Dokumente bekannt, die elektrische Maschinen beschreiben, wobei sich überlappenden Statorspulen vor dem Zusammenbauen mit dem Stator vorgefertigt werden.

In DE 25 11 567 A1 überlappen sich die Statorspulen dachziegelartig. Der holzylindrische Stator besteht aus einem elektrisch nicht leitenden und nicht magnetisierbaren Material. Auf der Außenfläche des Stators sind, zum einfachen und gleichmäßigen Auflegen der Formspulen, in axialer Richtung verlaufende Nuten über den Umfang angeordnet.

DE 38 34 673 A1 zeigt überlappende Statorspulen, wobei sich jede erste Spule einer Phase in einer ersten Schicht befindet und jede zweite Spule einer Phase in einer zweiten Schicht und wobei die zweite Schicht die erste Schicht umgibt.

Aus EP 0 150 070 A2 und WO 93/06649 A1 ist eine elektrische Maschine nach dem Oberbegriff von Anspruch 1 vorbekannt, wobei die Statorspulen sich dachziegelartig überlappen. In WO 93/06649 A1 werden die benachbarten Statorspulen aller Phasen simultan gewickelt.

Es ist daher die Aufgabe der vorliegenden Erfindung eine vorteilhafte Wickelungsanordnung bereitzustellen, wobei zusätzlichen Verluste vermieden werden. Diese Aufgabe wird durch die elektrische Maschine mit einer Wicklung zur Erzeugung eines Drehfeldes gemäß dem Anspruch 1 gelöst. Weiterhin wird diese Aufgabe durch ein Verfahren zur Herstellung der Wicklung der elektrischen Maschine gemäß dem Oberbegriff des Anspruchs 7 in Verbindung mit den kennzeichnenden Merkmalen gelöst. Vorteilhafte Weiterbildungen der Erfindung sind in den abhängigen Ansprüchen angegeben.
Es wird eine elektrische Maschine mit einer Wicklung zur Erzeugung eines Drehfeldes mit mindestens zwei Spulen pro Phase und Polpaar vorgeschlagen, wobei eine erste Spule jeder Phase um 180° elektrisch gegen eine zweite entgegengesetzt gewickelte Spule dieser Phase gedreht ist und wobei sich die Spulen benachbarter Phasen überlappen und sich jede erste Spule einer Phase in einer ersten Schicht befindet und jede zweite Spule einer Phase in einer zweiten Schicht, wobei die zweite Schicht die erste Schicht umgibt.
Die Überlappungen werden insbesondere im Bereich der Wickelköpfe sichtbar und werden durch einen größeren Wickelschritt erreicht. Durch die erfindungsgemäße Verteilung der sich überlappenden Spulen ergeben sich symmetrische Phasenwicklungen. Dadurch wird sichergestellt, dass keine zusätzlichen Harmonischen durch Unsymmetrien entstehen.
Gemäß einer bevorzugten Ausführungsform der erfindungsgemäßen elektrischen Maschine sind die erste und die zweite Spule einer Phase in Reihe geschaltet. Dadurch wird sichergestellt, dass in beiden Spulen auch der gleiche Strom fließt. Bei einer Parallelschaltung wäre dies nur bei identischen Widerständen und Induktivitäten der beiden Teilspulen der Fall.
Gemäß einer weiteren Ausführungsform der erfindungsgemäßen elektrischen Maschine ist die Wicklung eine eisenlose Luftspaltwicklung. Die Ausbildung als Luftspaltwicklung ist besonders vorteilhaft, weil dadurch Nutrastmomente vermieden werden können. Des Weiteren werden Ummagnetisierungsverluste und Wirbelstromverluste reduziert oder entfallen ganz, je nachdem ob ein magnetischer Rückschluss vorhanden ist oder nicht. Dies ist besonders bei Betrieb der Maschine mit hohen Drehzahlen von Interesse, da die Ummagnetisierungsverluste proportional mit der Frequenz und die Wirbelstromverluste sogar proportional zum Quadrat der Frequenz steigen.

Bei einer Luftspaltwicklung entfällt die Möglichkeit der Verteilung des Magnetfeldes durch Polschuhe, so dass sich bei einer Luftspaltwicklung mit konzentrierten Spulen das Magnetfeld auf den kleinen Bereich der Spule beschränken würde. Mit der Vergrößerung des Wickelschritts werden Luftspaltwicklungen erst sinnvoll.

Gemäß einer weiteren Ausführungsform der erfindungsgemäßen elektrischen Maschine ist das Leitermaterial für die Wicklung Litze und die Litze besteht aus mehreren einzeln isolierten Drähten, die innerhalb der Litze verdrillt sind. Die Verwendung von Litze ist für Maschinen, die bei hohen Drehzahlen betrieben werden, von Vorteil, weil dadurch die Wirbelstromverluste im Leitermaterial reduziert werden. Ebenfalls werden die Verluste durch den Skineffekt, auch Stromverdrängung genannt, reduziert. Die Verluste werden dabei um so stärker reduziert, je geringer der Querschnitt des einzelnen Drahtes ist. Der Gesamtquerschnitt der Litze, also die Anzahl der parallelen Drähte, wird dabei durch den erforderlichen Strombedarf der Maschine bestimmt. Die Maschinenspannung bestimmt dagegen die Anzahl der Windungen einer Phasenwicklung.

Des Weitern ist es von Vorteil, die Litze zu verdrillen, da dadurch die von jedem Draht mit einer Windung umschlossene Fläche im Mittel gleich ist. Bei nicht verdrillter Litze können diese Flächen differieren, wodurch es zu einer Abweichung zwischen den induzierten Spannungen und damit zu Ausgleichsströmen zwischen den einzelnen parallelen Drähten kommt, die wiederum unerwünschte Verluste erzeugen. Die Litze ist dabei so verdrillt, dass die Schlaglänge der axialen Länge einer Windung entspricht, wobei die Schlaglänge die Länge ist, über die die Drähte der Litze um 360° gegeneinander verdreht sind.

Gemäß einer weiteren Ausführungsform ist die elektrische Maschine ein elektronisch kommutierter Gleichstrommotor. Ein solcher EC-Motor besteht aus einer Statorwicklung zur Erzeugung eines Drehfeldes und einem permanenterregten Rotor. Die Statorwicklung wird dabei mit blockförmigen Strömen gespeist. Zur Herstellung der Wicklung einer erfindungsgemäßen Maschine in Gestalt einer Luftspaltwicklung mit Litze als Leitermaterial und drei Phasen wird ein automatisches Wickelsystem angewendet, was aus einem frei programmierbaren 2-Achsen CNC-System mit einem dreifach Nadelwickelkopf und einem zweifach-Werkstückträger ausgeführt ist. Eine stetige Zwangsführung der Litze mit einem definierten Drahtzug ist dabei zu gewährleisten. Bei dem mit dem erfindungsgemäßen Verfahren erzielten Wickelschema werden mit drei separaten Litzen die drei ersten Spulen simultan gewickelt und dann die drei zweiten Spulen der drei Phasen. Erfindungsgemäß erfolgt das Wickeln der Spulen mittels eines Wickelkörpers, wobei der Wickelkörper endseitige Halteelemente aufweist, um die die Litzen herumgeführt werden können. Der Wickelkörper besitzt bereits die zylinderförmige Gestalt, die die Wicklung für den Einsatz in einer rotierenden elektrischen Maschine aufweisen muss. Der Wickelkörper dient dabei als Führungskörper für die Litze, welcher im Handhabungssystem einer 2-Achsen CNC-Maschine eingebracht werden kann. Die endseitigen Halteelemente dienen lediglich als Hilfselemente, welche am Wickelkörper angebracht oder an diesen angeformt sein. Der beschriebene Wickelkörper findet vor allem beim Wickeln von Luftspaltwicklungen Anwendung und ist dann aus Kunststoff oder einem nicht magnetisch leitendem Metall. Bei einer eisenbehafteten Maschine dient der ohnehin vorhandene Eisenkern als Wickelkörper zur Führung der Wicklung.

Ferner umfasst der Wickelkörper für eine Luftspaltwicklung mehrere Stege, welche zur Ausrichtung und Positionierung der Litze dienen. Diese Stege dienen als Wickelhilfe, um analog zu den Zähnen oder Polen zwischen den Nuten von konventionellen Eisenkernstatoren, den Draht bzw. die Litze um diese wickeln zu können. Nachdem die Wicklung mittels des Wickelkörpers fertig gestellt ist, kann dieser nicht wieder entnommen werden, weil Halteelemente vorgesehen sind, die dies verhindern. Wenn der Wickelkörper nicht entnommen wird, können die Stege auch als Führung dienen, um den Wickelkörper mit der Wicklung in ein Gehäuse einzuführen. Dadurch wird sichergestellt, dass die Anschlüsse der Wicklung so positioniert werden, dass sie an die Platine mit der Leistungselektronik angeschlossen werden können. Zur Isolation und zur Erzeugung einer höheren mechanischen Stabilität ist es von besonderem Vorteil, dass die Wicklung vergossen wird, wobei das Vergießen mittels eines verfestigbaren Stoffes aus der Gruppe der Kunststoffe, insbesondere ein Polyurethan, erfolgt. Ein Polyurethan-Material oder ein anderes vorzugsweise gut wärmeleitendes Material wie ein Vergussharz ermöglicht es, die Wicklung gegebenenfalls einschließlich des Wickelkörpers einzugießen, woraufhin das Vergussmaterial erstarrt und einen Trägerkörper bildet. Vorteilhafterweise handelt es sich bei dem verfestigbaren Stoff um ein Einkomponenten- oder Mehrkomponentenharz. Solcherart Harze haben sich als beständig und leicht zu verarbeiten herausgestellt. So können unter anderem auch Kunststoffe wie Polyesterharz, Epoxidharz, Silikonharz oder Vinylesterharz Verwendung finden.

Vorteilhafterweise umfasst jede Phase zwei Spulen, welche elektrisch in Reihe geschaltet werden, wobei die Spulen aus einem durchgehenden Leitermaterial mittels eines kontinuierlichen Durchwickelns gewickelt werden. Zunächst werden alle ersten Spulen jeder Phase zeitgleich gewickelt, woraufhin ohne eine Unterbrechung des jeweiligen Leitermaterials alle zweiten Spulen zeitgleich gewickelt werden.

Die Erfindung wird nachfolgend anhand eines in den Zeichnungen dargestellten Ausführungsbeispiels näher erläutert.

Es zeigen:
- Fig. 1: ein erfindungsgemäßes Wickelschema für eine Drehstromwicklung mit zwei um 180° elektrisch versetzten Spulen pro Phase und Polpaar;
- Fig. 2: eine Ansicht der Stirnflächen eines Wickelkörpers mit einer erfindungsgemäßen Wicklung mit einem Polpaar;
- Fig. 3: eine Seitenansicht des Wickelkörpers.

Das Ausführungsbeispiel bezieht sich auf einen elektronisch kommutierten Gleichstrommotor zum Antrieb eines Spinnrotors einer Offenendspinnmaschine. In diesem Anwendungsgebiet sind hohe Drehzahlen erforderlich, so dass die Wicklung als Luftspaltwicklung mit verdrillter Litze ausgebildet ist.

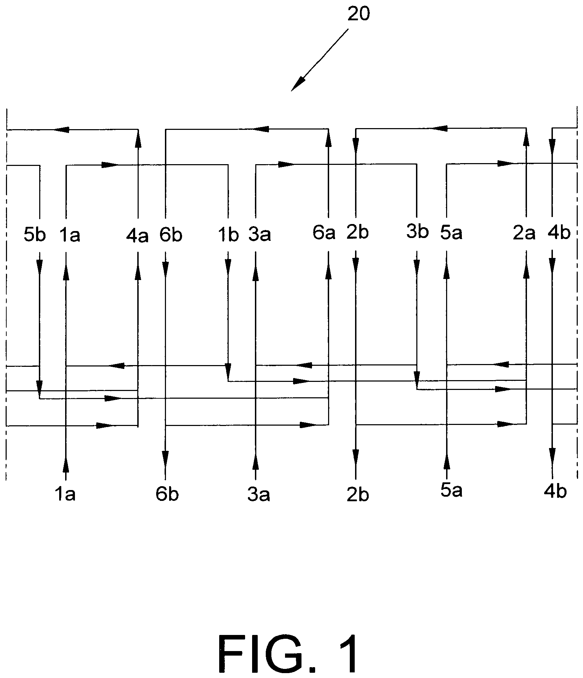

Fig. 1 zeigt ein erfindungsgemäßes Wickelschema mit zwei um 180°elektrisch versetzten Spulen pro Phase. Die dargestellte Wicklung 20 ist dreiphasig und zeigt die Wicklung über einem Polpaar. Bei einer zweipoligen Maschine verteilt sich die dargestellte Wicklung 20 über die gesamte Maschine, also über 360°. Bei einer vierpoligen Maschine, also mit zwei Polpaaren, befindet sich die dargestellte Wicklung 20 nur über einem Bereich von 180°. Über dem zweiten Polpaar wiederholt sich die Wicklung 20 dann entsprechend. Bei p Polpaaren stehen für das Wickelschema dann noch 360°/p mechanisch zu Verfügung. Der mechanische Versatz der ersten und zweiten Spule einer Phase beträgt dabei 180°/p.

Zur Herstellung der erfindungsgemäßen symmetrischen Wicklung 20 werden zuerst die ersten Spulen jeder Phase mit den Hinleitern 1a, 3a, 5a und den Rückleitern 1b, 3b, 5b simultan gewickelt und dann ohne Unterbrechung der einzelnen Litzen die zweiten Spulen jeder Phase mit den Hinleitern 2a, 4a, 6a und den Rückleitern 2b, 4b, 6b. Der Anfang der ersten Spulen 1a, 3a, 5a und die Enden der zweiten Spulen 2b, 4b, 6b werden herausgeführt, um die Phasen mit einer Leistungselektronik verschalten zu können.

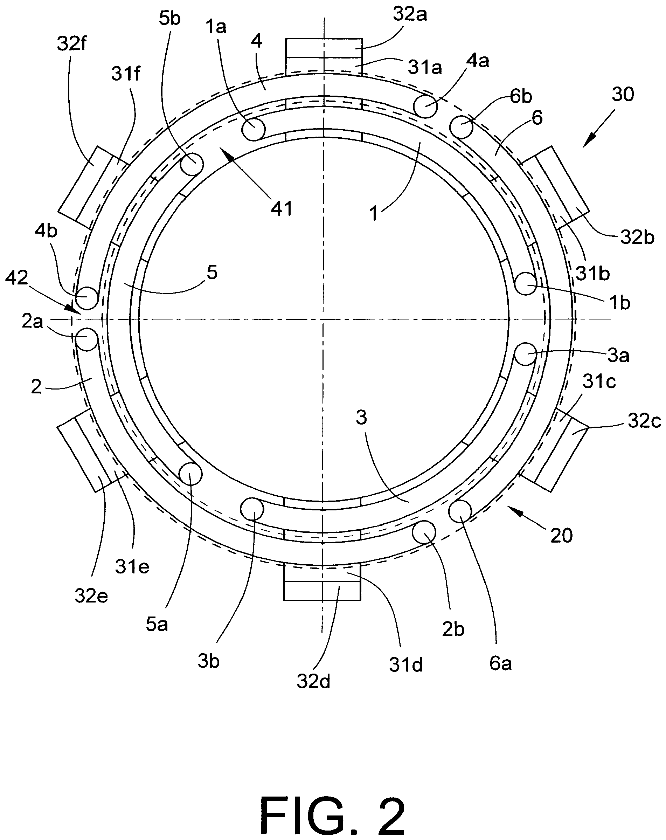

Fig. 2 zeigt die erfindungsgemäße Wicklung 20 auf einem Wickelkörper 30 mit sechs Stegen 31a bis 31f und endseitigen Halteelementen 32a bis 32f. In der Ansicht auf die Stirnflächen des Wickelkörpers sind die Wickelköpfe der Spulen 1 bis 6 zu sehen. Weiterhin sind die Hinleiter 1a bis 6a und die Rückleiter 1b bis 6b angedeutet. Bei der Herstellung der Wicklung wird zuerst die Spule 1 um die Stege 31a und 31b gewickelt und die Spule 3 um die Stege 31c und 31d sowie die Spule 5 um die Stege 31e und 31f. Diese drei Spulen bilden die ersten Spulen der drei Phasen und liegen in einer ersten Schicht 41. Dann wird die Spule 2 um die Stege 31d und 31e gewickelt und die Spule 4 um die Stege 31f und 31a sowie die Spule 6 um die Stege 31b und 31c. Die Spulen 2, 4 und 6 bilden die zweiten Spulen der drei Phasen und liegen in einer zweiten Schicht 42, die die erste Schicht 41 umgibt. Die Spule 2 ist dabei um 180° zur Spule 1 gedreht und entgegengesetzt gewickelt. Entsprechendes gilt für Spule 4 und 3 sowie für Spule 6 und 5.

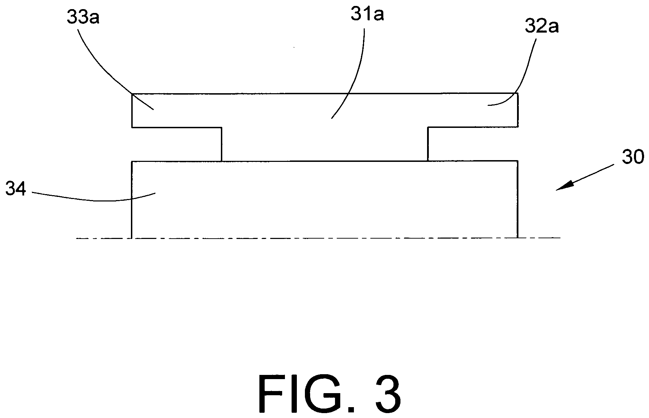

Fig. 3 zeigt den Wickelkörper 30 ohne Wicklung in der Seitenansicht. Dabei ist der zylindrische Grundkörper 34 und einer der sechs Stege 31a zu sehen. Der Steg 31a weist auf beiden Stirnseiten je ein Halteelement 32a und 33a auf. Die anderen hier nicht dargestellten Stege 31b bis 31f sind entsprechend auf beiden Stirnseiten mit je einem Halteelement 32b bis 32f und 33b bis 33f ausgestattet.

In dem Ausführungsbeispiel wurde eine Wicklung für drei Phasen und mit zwei Spulen pro Phase und Polpaar dargestellt. Alternativ sind auch andere Phasenzahlen möglich. Auch können mehr als zwei Spulen pro Phase und Polpaar verwendet werden. Beispielsweise kann man die Windungen einer Spule des Ausführungsbeispiels auf mehrere Stegzwischenräume verteilen. Dadurch wird die Anzahl der Spulen erhöht. Entsprechend muss die Anzahl der Stege des Wickelkörpers erhöht werden. Dadurch erhält man eine Zonenwicklung, die die Harmonischen weiter reduziert.

## Patentansprüche

1. Elektrische Maschine mit einer Wicklung (20) zur Erzeugung eines Drehfeldes mit mindestens zwei Spulen pro Phase und Polpaar, wobei eine erste Spule (1,3,5) jeder Phase um 180° elektrisch gegen eine zweite entgegengesetzt gewickelte Spule (2,4,6) dieser Phase gedreht ist, wobei sich die Spulen benachbarter Phasen überlappen, **dadurch gekennzeichnet, dass** sich jede erste Spule (1,3,5) einer Phase in einer ersten Schicht (41) befindet und jede zweite Spule (2,4,6) einer Phase in einer zweiten Schicht (42), wobei die zweite Schicht (42) die erste Schicht (41) umgibt, dass die Wicklung auf einem zylindrischen Wickelkörper angeordnet ist, welcher Stege (31a-31f) mit endseitigen Halteelementen (32a-32f,33a-33f) aufweist und dass die Halteelemente verhindern, dass der Wickelkörper entnommen werden kann.

2. Elektrische Maschine nach Anspruch 1, **dadurch gekennzeichnet, dass** die erste Spule (1,3,5) und die zweite Spule (2,4,6) einer Phase in Reihe geschaltet sind.

3. Elektrische Maschine nach einem der vorherigen Ansprüche, **dadurch gekennzeichnet, dass** die Wicklung (20) eine eisenlose Luftspaltwicklung ist.

4. Elektrische Maschine nach einem der vorherigen Ansprüche, **dadurch gekennzeichnet, dass** das Leitermaterial für die Wicklung Litze ist und dass die Litze aus mehreren einzeln isolierten Drähten besteht, die miteinander verdrillt sind.

5. Elektrische Maschine nach einem der vorherigen Ansprüche, **dadurch gekennzeichnet, dass** die elektrische Maschine ein elektronisch kommutierter Gleichstrommotor ist.

6. Elektrische Maschine nach einem der vorherigen Ansprüche, **dadurch gekennzeichnet, dass** die Wicklung in einem verfestigten Stoff, insbesondere einem Polyurethan, vergossen ist.

7. Verfahren zur Herstellung der Wicklung (20) der elektrischen Maschine nach einem der Ansprüche 1 bis 5, wobei zuerst die ersten Spulen (1,3,5) jeder Phase und dann die zweiten Spulen (2,4,6) jeder Phase simultan gewickelt werden, **dadurch gekennzeichnet, dass** die Spulen (1,3,5,2,4,6) auf den zylindrischen Wickelkörper (30) gewickelt werden, welcher Stege (31a-31f) mit endseitigen Halteelementen (32a-32f, 33a-33f) aufweist, um die das Leitermaterial herumgeführt wird.

8. Verfahren nach Anspruch 7, **dadurch gekennzeichnet, dass** die Wicklung (20) vergossen wird, wobei das Vergießen mittels eines verfestigbaren Stoffes, insbesondere ein Polyurethan, erfolgt.

9. Verfahren nach einem der Ansprüche 7 oder 8, **dadurch gekennzeichnet, dass** die mindestens zwei Spulen elektrisch in Reihe geschaltet werden und die erste Spule (1,3,5) und die zweite Spule (2,4,6) aus einem durchgehenden Leitermaterial mittels eines kontinuierlichen Durchwickelns gewickelt werden.

## Claims

1. Electrical device with winding (20) for producing a rotating field with a minimum of two packages per phase and pole pair, with the first package (1, 3, 5) of each phase being rotated by 180° against a second package (2, 4, 6) with reverse winding of the same phase, **characterised in that** the packages of adjoining phases overlap and that each first package (1, 3, 5) of a phase is positioned in a first layer (41) and each second package (2, 4, 6) of a phase in a second layer (42), with the second layer (42) encasing the first layer (41), **characterised in that** the winding is arranged on a cylindrical winding corpus, the ridges (31a-31f) of which have retaining elements (32a-32f,33a-33f) on the end and **characterised in that** the retaining elements prevent the winding corpus from being removed.

2. Electrical device in accordance with requirement 1,**characterised in that** the first package (1, 3, 5) and second package (2, 4, 6) of a phase are connected in series.

3. Electrical device in accordance with the previous requirements, **characterised in that** the winding (20) is a non-ferrous air gap winding.

4. Electrical device in accordance with the previous requirements, **characterised in that** the conducting material for the winding is the strand and that the strand consists of several individually isolated wires that are twisted together.

5. Electrical device in accordance with the previous requirements, **characterised in that** the electrical device is an electronically commutated DC motor.

6. Electrical device in accordance with the previous requirements, **characterised in that** the winding is moulded in a solidified material, particularly one of the polyurethanes.

7. Method for producing the electrical device winding (20) in accordance with one of the claims 1 to 5, wherein initially the first packages (1, 3, 5) of each phase and then the second packages (2, 4, 6) of each phase are wound simultaneously, **characterised in that** the packages (1, 3, 5, 2, 4, 6) are wound on the cylindrical winding corpus (30) with ridges (31a-31f), with retaining elements (32a-32f, 33a-33f) on the end, around which the conducting material is guided.

8. Method in accordance with claim 7, **characterised in that** the winding (20) is moulded using a solidifying material, particularly one of the polyurethanes.

9. Method in accordance with claim 7 or 8, **characterised in that** the minimum of two packages are electrically connected in series and the first package (1, 3, 5) and second package (2, 4, 6) are wound from continuous conducting material using a continuous winding process.

## Revendications

1. Machine électrique avec un enroulement (20) pour la génération d'un champ tournant avec au moins deux bobines par phase et paire de pôles, sachant qu'une première bobine (1,3,5) de chaque phase est tournée électriquement de 180° contre une seconde bobine (2,4,6) enroulée opposée de cette phase, sachant que les bobines des phases voisines se chevauchent, **caractérisée en ce que** chaque première bobine (1,3,5) d'une phase se trouve sur la première couche (41) alors que chaque seconde bobine (2,4,6) d'une phase se trouve sur la deuxième couche (42), sachant que la deuxième couche (42) entoure la première couche(41), sachant que l'enroulement est placé sur un corps d'enroulement cylindrique qui présente des barres (31a-31f) avec des éléments de retenue d'un côté (32a-32f,33a-33f) et que les éléments de retenue d'un côté de pouvoir prélever le corps d'enroulement.

2. Machine électrique selon la revendication 1, **caractérisée en ce que** la première bobine (1,3,5) et la deuxième bobine (2,4,6) d'une phase sont connectées en série.

3. Machine électrique selon une des revendications précédentes, **caractérisée en ce que** l'enroulement (20) est un enroulement d'entrefer sans fer.

4. Machine électrique selon une des revendications précédentes, **caractérisée en ce que** le matériau conducteur pour l'enroulement est un toron et que le toron se compose de plusieurs fils isolés individuels torsadés entre eux.

5. Machine électrique selon une des revendications précédentes, **caractérisée en ce que** la machine électrique est un moteur à courant continu à commutation électrique.

6. Machine électrique selon une des revendications précédentes, **caractérisée en ce que** l'enroulement, est coulé dans un matériau solidifiable, en particulier un polyuréthane.

7. Procédé de génération de l'enroulement (20) de la machine électrique selon une des revendications de 1 à 5, sachant que d'abord les premières bobines (1,3,5) de chaque phase, puis les deuxièmes bobines (2,4,6) de chaque phase sont enroulées simultanément, **caractérisée en ce que** les bobines (1,3,5,2,4,6) sont enroulées sur le corps d'enroulement cylindrique (30) qui présente des barres (31a-31f) avec des éléments de retenue d'un côté (32a-32f, 33a-33f) autour desquels le matériau conducteur est guidé.

8. Procédé selon la revendication 7, **caractérisée en ce que** l'enroulement (20) est coulé, sachant que la coulée est réalisée avec un matériau solidifiable, en particulier un polyuréthane.

9. Procédé selon une des revendications 7 ou 8, **caractérisée en ce que** les deux bobines au moins sont connectées électriquement en série et que la première bobine (1,3,5) et la deuxième bobine (2,4,6) sont enroulées à partir d'un matériau conducteur continu à l'aide d'un enroulement continu.
